# EUROPEAN PATENT APPLICATION

(11) **EP 1 988 263 A2**
(43) Date of publication of application: **05.11.2008**
(21) Application number: 08075290.0
(22) Date of filing: 14.04.2008
(51) Int. Cl.: F01P 5/04, F01P 7/04, F01P 7/08, F16D 27/12

(54) **Apparatus with free-wheel device and double-armature clutch for transmitting the movement to fans for cooling vehicles**

(30) Priority: 26.04.2007 IT MI20070863
(71) Applicant: Baruffaldi S.p.A., 20067 Tribiano MI (IT)
(72) Inventor: Boffelli, Piercarlo, 20067 Tribiano (MI) (IT); Bellotti, Claudio, 20067 Tribiano (MI) (IT); Depoli, Erminio, 20067 Tribiano (MI) (IT); Natale, Fabio, 20067 Tribiano (MI) (IT)
(74) Representative: Raimondi, Margherita

(57) **Abstract**

Apparatus for transmitting the movement to a fan (1) for cooling the cooling fluid in a motor vehicle, comprising a driven shaft (2) on which the fan (1) is mounted idle by means of a support (1a) and a bearing (1b); means (11) for generating the movement, connected to the shaft (2) and coaxial and integral with the driving shaft of the vehicle; characterized in that it comprises a first free-wheel device (100) for transmitting the movement to the driven shaft (2) for operating the fan (1) with a first speed of rotation; a second device (200) for transmitting the movement to the driven shaft (2) for operating the fan (1) with a speed greater than that of the said free-wheel device (100); a control system (300) for engagement/disengagement of the second device (200) for selecting one or other of the two speeds; a clutch (400) with a double armature (431,432) which is arranged between the driven shaft (2) and the fan (1) and controlled engagement/disengagement of which is able to produce rotation of the fan (1) with one of the said different speeds or an idle condition of the fan (1) with respect to the driven shaft (2).

## Description

The present invention relates to an apparatus for transmitting the movement to fans for cooling the cooling fluid of vehicles.

It is known in the technical sector relating to the cooling of cooling fluids contained in the radiators of motor vehicles that there exists the need to force air onto the said radiator in order to obtain more rapid dissipation of heat from the fluid to the exterior, said forced air flow being obtained by causing the rotation of a fan normally mounted on the shaft of the water pump or on the driving shaft or on a shaft which is driven and fixed and carries a pulley which receives movement from a belt operated by the driving shaft.

It is also known that said fan must be made to rotate only when a certain predefined temperature of the cooling fluids is reached, said temperature being sensed by means of a thermostat which actuates an electromagnetic clutch, closing of which starts rotation of the fan.

In greater detail, it is required that a motor vehicle fan should be able to rotate:
- at a speed greater than that of the transmission shaft when there are higher external temperatures or during use in critical conditions which result in overheating of the engine;
- at speeds less than that of the driving shaft when reduced ventilation is required, for example in order to cool only the radiator of the air-conditioning system;
- at zero speed, namely with the fan which does not rotate at all and remains in an idle condition with respect to the transmission drive shaft, in the case of particularly low temperatures where further cooling serves no purpose or may even be damaging.

In an attempt to achieve such performance features coupling systems of the mixed type with electromagnetically controlled friction clutches and drive joints based on the use of eddy currents generated by the rotation of a conducting part in the vicinity of permanent magnets have been developed.

These devices, however, have large axial dimensions and are complicated and costly to implement and in some solutions do not envisage the possibility of being able to maintain an albeit slow rotation of the fan (fail safe mode) in the event of interruption and/or total failure of the power supply of the control circuits for the various actuating components.

The technical problem which is posed, therefore, is to provide an apparatus for transmitting the rotational movement to a fan for cooling the cooling fluid in motor vehicles, which allows operation of the fan at a number of revolutions which is different from that of the driving shaft and can be determined depending on the actual cooling requirement of the engine.

In connection with this problem, it is also required that the apparatus should be able to keep the fan stopped in the idle position and also ensure safe rotation of the fan in the event of malfunctioning of the associated control devices.

In addition to this it is required that the apparatus should have compact dimensions, particularly in the axial direction, and be composed of a small number of costly parts and be able to be easily mounted inside the engine compartment.

These technical problems are solved according to the present invention by an apparatus for transmitting the movement to a fan for cooling the cooling fluid of motor vehicle, according to the characteristic features of Claim 1.

Further details may be obtained from the following description of a non-limiting example of embodiment of the invention, provided with reference to the accompanying drawings in which:
- Figure 1:: shows a schematic axial section through a first embodiment of the apparatus for transmitting the movement to the fan according to the present invention with transmission of a first operating speed;
- Figure 2:: shows a sectional view, similar to that of Fig. 1, with transmission of a second speed greater than the first speed;
- Figure 3:: shows a schematic axial section through a further embodiment of the movement transmission apparatus with auxiliary operation of the water pump; and
- Figure 4:: shows a sectional view, similar to that of Fig. 3, of a second embodiment of the auxiliary transmission of the water pump.

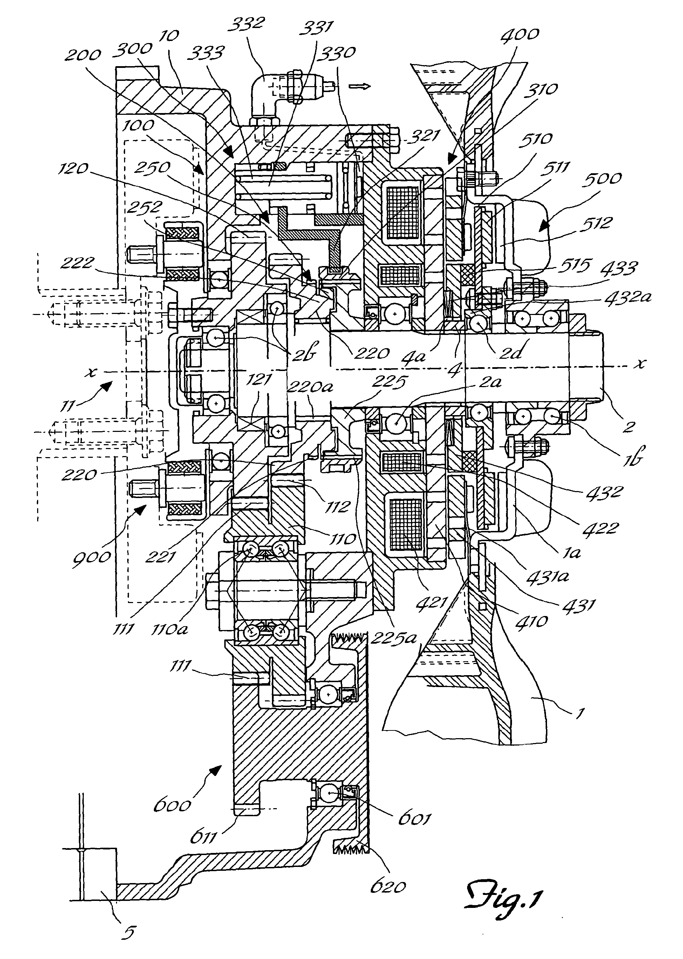

As shown in Fig. 1, the cooling fan 1 of a vehicle schematically shown with the base of the engine 5 is constrained to a bell member 1a mounted on a bearing 1b keyed onto the free end of a shaft 2 mounted on bearings 2a of a support housing 10 fixed to the base 5 of the engine; the shaft 2 is rotationally operated by the driving shaft of the vehicle via a connection 11 which is conventional per se and not described in detail.

The apparatus for transmitting the movement to the vehicle 1 comprises essentially:
- a first free-wheel device 100 for transmitting a movement with a predefined speed to the shaft 2 of the fan 1;
- a second device 200 with a synchronizer 250 for transmitting to the fan 1 a speed greater than that of the free-wheel device 100;
- a control device 300 for engaging/disengaging the second device 200 for selecting one or other of the two abovementioned speeds;
- a clutch 400 of the double-armature electromagnetic type, engagement/disengagement of which causes transmission of the rotational movement to the fan 1 or an idle condition thereof with respect to the shaft 2;
- an eddy-current or Foucault coupling 500 connected to one of the two armatures of the clutch 400 and designed to transmit to the fan a rotation at a slower speed.

In greater detail:
- the free-wheel device 100 comprises a first gear 120 mounted on the shaft 2 via bearings 2b and constrained to the shaft 2 by means of a free wheel 121, the gear receiving the movement via the said connection 11 to the driving shaft of the vehicle and being therefore always rotating;
- said first gear 120 meshes with a first set of teeth 111 of a toothed rim 110 mounted on an associated bearing 110a fixed to the housing 10;
- the toothed rim 110 has a second set of teeth 112 designed to mesh with the teeth of a second gear 220 coaxially mounted on the shaft 2 via a bearing 220a downstream of the first gear in the direction of the fan 1; by suitably determining the value of the transmission ratio for the toothed rim 110 and the second gear 220 the latter is made to rotate at a speed greater than that of the first gear 120.

The second gear 220 has a set of auxiliary radial teeth 221 designed to engage with a splined sleeve 310 and is able to be displaced in both directions, parallel to the longitudinal axis X-X of the shaft 2 forming part of the device 300 for controlling the coupling for selecting one or other of the two speeds; in greater detail, the sleeve 310 is able to be displaced in both directions, parallel to the longitudinal axis X-X, on the radial teeth 225a of a pinion 225 rotationally locked with the shaft 2; in this way, the displacement of the sleeve causes the engagement/disengagement thereof with/from said auxiliary teeth 221 of the second gear 220 and therefore the relative coupling/uncoupling of the second gear 220 and the pinion 225 and therefore the shaft 2.

The axial movement of the sleeve is obtained by means of a fork member 321 constrained axially, but not rotationally, with the said sleeve and a piston 331 of a cylinder 330 charged/discharged via a duct 332 controlled by electromechanical means (not shown) in turn connected to the temperature sensors.

An axial-thrust spring 333 is arranged between the piston 331 and the fixed housing 10 and is designed to keep the sleeve 310 in the position disengaged from the auxiliary teeth of the second gear 220.

A synchronizer 250 movable axially with the sleeve 310 is arranged between the said sleeve and the auxiliary teeth 221 of the second gear 220; the synchronizer has a conical seat 252 designed to mate axially with friction with a corresponding, axial, conical projection 222 of the second gear 220 so as to reduce to zero the relative speed of sleeve and gear prior to axial engagement of the former on the teeth of the latter.

Said electromagnetic clutch 400 is arranged coaxially with the shaft 2 and downstream of the second gear 200, said clutch comprising:
- a rotor 410 axially fixed to and rotationally locked with the shaft 2;
- a pair of electromagnets 421 and 422 of varying power concentric with each other and fixed to the housing 10 fastened to the body 5 of the engine;
- a corresponding pair of armatures 431 and 432 concentric with each other and facing the respective electromagnet 421,422;
- the radially outermost armature 431 is joined to one end of a respective resilient member 431a, the other end of which is joined to the fan 1 and able to allow axial displacement of the armature, but not relative rotation with respect to the fan;
- the radially innermost armature 432 is instead connected by means of a friction ring 515 to a disk 510 idle on a bearing 2d and carrying a plurality of permanent magnets 511 facing a ring of conductive material 512 integral with the bell member 1a which carries the fan 1;
- the radial innermost armature 432 has inner radial teeth 432a designed to mesh with corresponding teeth 4a of a bush 4 integral with the shaft 2 together with which it rotates; a Belleville washer 433 is also axially arranged between the armature 432 and the rotor 410 and is designed to keep the armature 432 pushed towards the fan 1 and therefore engaged with the teeth of the bush 4.

With this configuration it is possible to obtain the different and required speeds of rotation of the fan 1, i.e.:

### I° DIRECT SPEED

- when the radially outermost electromagnet 421 is excited, the armature 431 is recalled, engaging the fan 1 with the rotor 410;
- upon discharging of the cylinder 330 the piston 331 is displaced axially downstream by the thrusting action of the spring 333; consequently, the fork member 321 and the sleeve 310 move towards the fan 1, disengaging the second gear 220;
- in these conditions the first gear 120 of the free-wheel device 100 prevails and causes rotation of the shaft 2 and thus the rotor 410 and the fan 1 at a first speed greater than/the same as/less than that of the driving shaft depending on the transmission ratios employed.

### II° FASTER SPEED

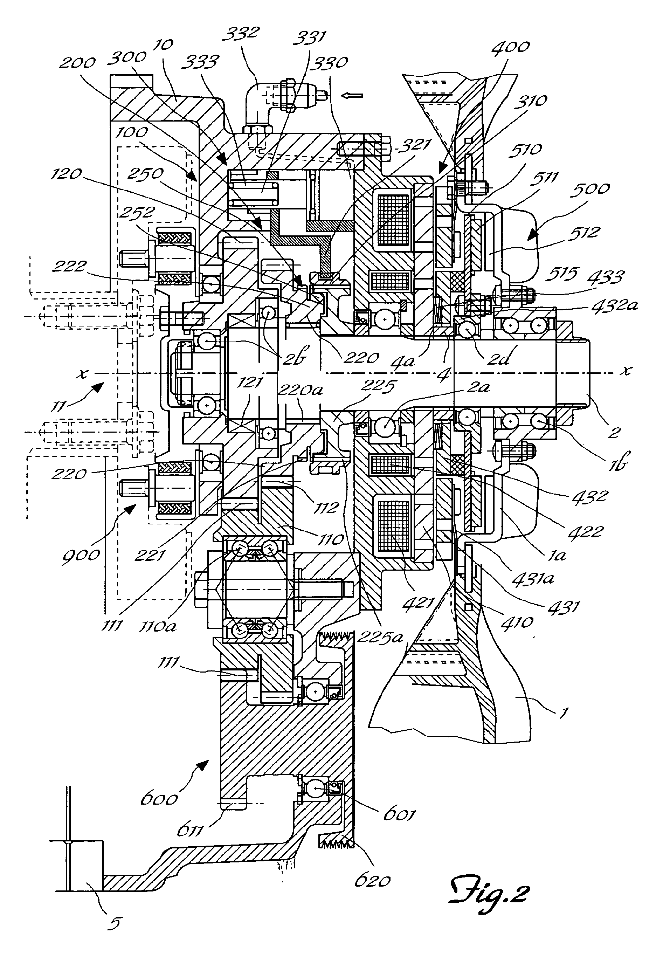

- When the radially outermost electromagnet 421 is excited, the outermost armature 431 is recalled, engaging the fan 1 with the rotor 410;
- upon charging of the cylinder 330 (Fig. 2) the piston 331 is displaced axially upstream, against the thrusting action of the spring 333 and consequently the fork member 321, the sleeve 310 and the synchronizer 250 move towards the second gear 220, engaging the latter by means of the auxiliary teeth 221; by suitably determining the dimensions of the toothed rim 110 the second gear 220 rotates at a speed greater than that of the first gear 120;
- preferably engagement of the sleeve on the second gear occurs in idle conditions - determined by the control unit (not shown) - of the fan in order to reduce the masses, thereby eliminating the relative speed and preventing possible damage;
- in these conditions the second gear 220 prevails over the first gear 120 of the free-wheel device 100 and causes rotation of the shaft 2 and therefore the rotor 410 and the fan 1 at a speed greater than that determined by the first gear 120;

### III° SLOWER SPEED

Should a slower cooling speed be required as, for example, in the case where only the radiator of the air-conditioning system must be cooled:
- the cylinder 330 is discharged so as to cause disengagement of the sleeve 310 from the second gear and therefore rotation of the rotor 410 at a speed the same as that of the first gear 120 of the free wheel device;
- the clutch 400 is operated, de-energizing both the outermost electromagnet 421 and the innermost electromagnet 422 so as to keep the innermost armature 433 pushed against the friction ring 515 by the action of the Belleville washers 433;
- in these conditions the fan 1 is operated by the Foucault coupling 500 which, owing to the relative slipping of driving disk 510 and driven disk 512, causes a reduction in the speed of rotation of the fan with respect to the speed of the first gear 120.

In addition it is envisaged that, by suitably designing the dimensions of the Foucault coupling, it is possible to determine two different slow speeds of rotation transmitted to the fan 1 depending on activation of the first gear 120 or second gear 220 for transmitting the movement to the shaft 2.

### IDLE

If no rotation of the fan 1 is required, it is also possible to obtain an idle condition thereof:
- by deactivating the outermost electromagnet 421 in order to separate the outermost armature 431 and activating the innermost electromagnet 422 in order to recall the innermost armature 432, separating the disk 510 from the friction ring 515 and causing opening of the Foucault coupling which is no longer able to transmit the rotation to the fan 1 which remains stationary in the idle condition.

### FAIL SAFE MODE

Via the Foucault coupling 500 it is also possible to obtain safety operation, i.e. so-called "fail-safe mode", so as to ensure rotation of the fan also in the event of faults affecting the control system.

For this purpose, assuming a fault both in control of the device 300 for controlling engagement and in the electric power supply to the electromagnets 421,422, rotational operation of the shaft 2 is performed by means of the first gear 120 and a thrust is imparted by the springs 433 onto the innermost armature 432 which meshes with the bush 4 integral with the shaft 2 and, via the friction ring 515, engages the disk 510 of the Foucault coupling which transmits in any case a slower speed to the fan 1.

According to a preferred embodiment it is envisaged moreover that the movement transmission apparatus according to the present invention comprises a further gear 600 mounted on a bearing 601 integral with the housing 10 and provided with radial teeth 611 designed to mesh with the corresponding teeth 111 of the toothed rim 110; on an axially opposite side to the operating side, the gear 600 is formed as a pulley 620 able to constitute a power take-off for auxiliary devices of the vehicle.

Owing to the position of said auxiliary gear on an axis parallel to the shaft 2, it is possible to limit the axial dimensions of the entire apparatus which is assembled inside a housing 10 from where only the shaft 2, for mounting of the fan 1, and the said auxiliary power take-off 600 project.

In addition to facilitating the operations for assembly of the entire apparatus, it is also possible to provide gears with oil-bath lubrication, thereby increasing the working life and silent operation thereof.

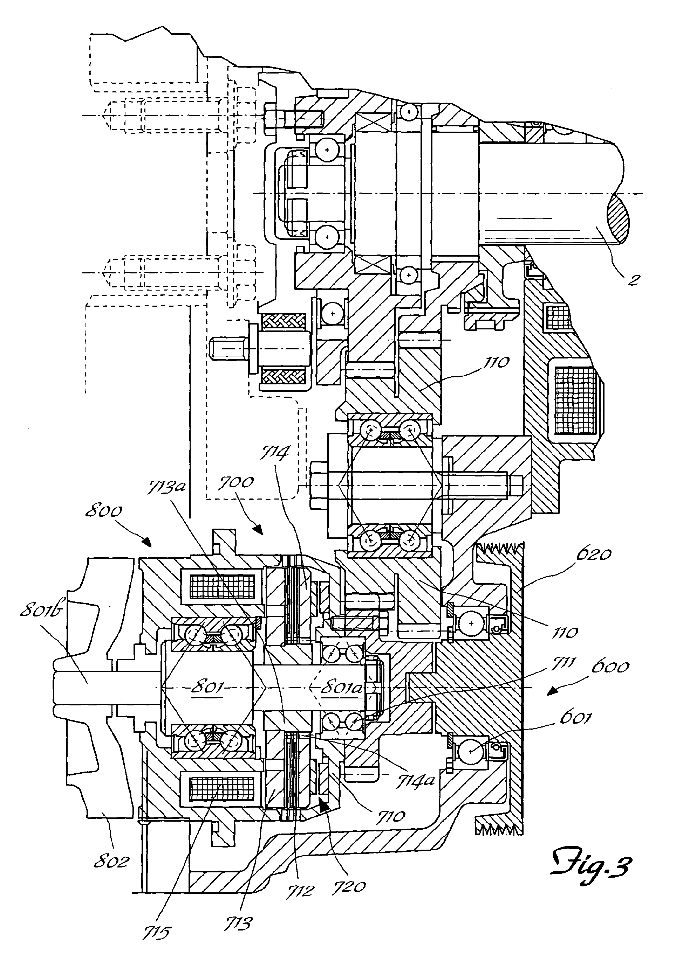

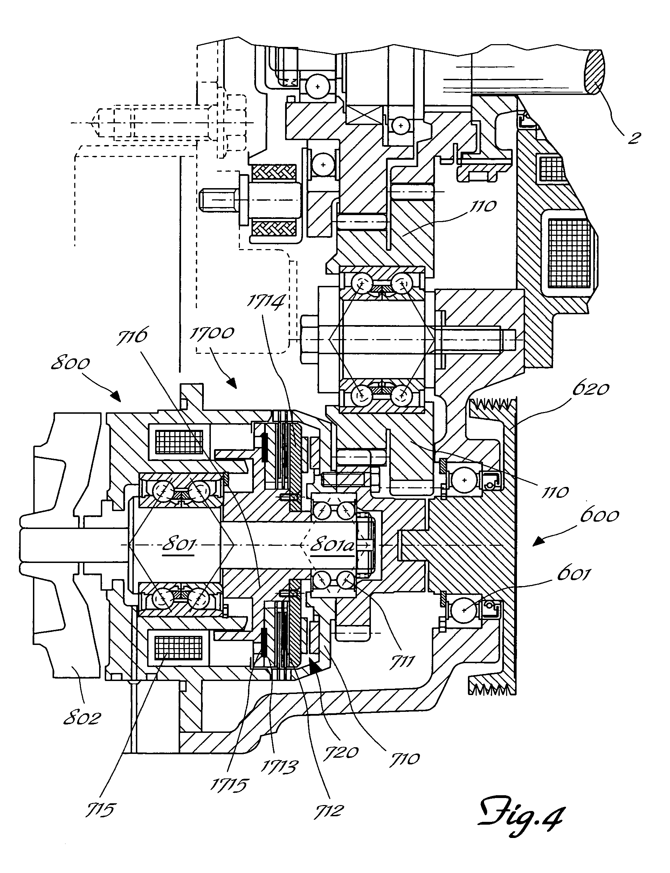

As shown in Figs. 3 and 4, it is also possible to envisage that the gear 600 is connected to a bell member 710 mounted on a bearing 711 mounted on one end 801a of a shaft 801, the other end of which carries the impeller 802 of a water pump 800.

In the example shown in Fig. 4 the bell member 710 forms the driving part of a clutch 700 comprising multiple disks 712 arranged between the said bell member and a disk 713 mounted axially fixed on a bush 713a on which the armature 714 of the clutch is also mounted; the armature 714 and the bell member 710 have, arranged between them, respective permanent magnets 720 which keep the armature 714 attracted towards the bell member as far as the axial stop 714a and hence the clutch 700 in the normally open condition, forming at the same time a Foucault drive coupling.

The armature 714 can be displaceably operated by means of the electromagnet 715 which, when excited, recalls axially the armature 714 towards the disk 713, overcoming the retaining action exerted by the permanent magnets 720 and causing friction packing of the inner and outer disks of the clutch.

In this way the continuous rotation of the gear 600 is transmitted to the shaft 801 via:
- the armature 714 rotationally driven by the bell member 710 via the Foucault coupling 720 with the electromagnet de-energized;
or via
- the disk 713 against which the clutch 700 is closed upon excitation of the electromagnet 715 in order to connect the shaft 801 to the bell member 711.

In the first case a condition of rotation at a slow speed or in fail-safe mode due to relative slipping of the magnets 720 of the Foucault coupling is obtained; while in the second case the impeller 802 of the pump is operated at full speed.

Fig. 4 shows a variation of embodiment of the transmission of the movement to the shaft 801 of the pump 800; in this configuration it is envisaged arranging resilient means 1715 between the rotor 716 of the clutch of the pump 800 and the disk 1713 which is in this case movable axially and acts as an armature; on the opposite side to the disks 712 the disk 1714 which acts as a fixed locating member instead of an armature is axially locked.

With this configuration the clutch 1700 is kept constantly closed by the resilient means 1715, ensuring a fail-safe condition at full speed of the impeller which is always connected to the gear 600 via the bell member 710; should it be required to operate the pump at a slow speed, the electromagnet 715 is activated and, recalling the armature 1713, opens the clutch, causing transmission of the movement to the shaft 801 via the magnetic coupling 720 which, owing to relative slipping, transmits to the shaft a smaller number of revolutions than those of the bell member.

It is pointed out how, in this case also, it is possible to design the entire apparatus so that it is contained inside a housing 10 with oil-bath lubrication of all the movement transmission devices.

It is envisaged, moreover, that a resilient coupling 900 is arranged between the movement generating means 11 and the driven shaft 2, said coupling being able to absorb any inconstancy in the movement due to the shaft of the internal-combustion engine.

It can be seen therefore how, with the apparatus according to the invention, it is possible to obtain rotational operation of the fan at three different speeds, one of which during operation of the "fail-safe" type, with the possibility also of obtaining an idle condition where the fan is no longer operated.

In addition to this, the apparatus according to the present invention offers advantages compared to devices which use sliding couplings, owing to the high efficiency which can be achieved as a result of the fact that the reduction in speed is produced by transmissions without relative sliding of two parts and therefore without the generation of large amounts of heat which must be dissipated.

With the apparatus according to the invention it is possible moreover to limit the axial dimensions of the assembly as required in all those applications where the longitudinal dimensions of the engine compartment do not allow degrees of freedom, while ensuring the availability of a power take-off for auxiliary components such as auxiliary fans for cooling the radiators of air-conditioners and the like.

In connection with this reduction in the dimensions it is also possible to provide a control system for the driven members such as the water pump which can be operated with two different speeds, at least one of which being in fail-safe mode.

## Claims

1. Apparatus for transmitting the movement to a fan (1) for cooling the cooling fluid in a motor vehicle, comprising:
- a driven shaft (2) on which the fan (1) is mounted idle by means of a support (1a) and a bearing (1b);
- means (11) for generating the movement, connected to the shaft (2) and coaxial and integral with the driving shaft of the vehicle;
**characterized in that** it comprises:
- a first free-wheel device (100) for transmitting the movement to the driven shaft (2) for operating the fan (1) with a first speed of rotation;
- a second device (200) for transmitting the movement to the driven shaft (2) for operating the fan (2) with a speed greater than that of the said free-wheel device (100);
- a control system (300) for engagement/ disengagement of the second device (200) for selecting one or other of the two speeds;
- a clutch (400) with a double armature (431,432) which is arranged between the driven shaft (2) and the fan (1) and controlled engagement/disengagement of which is able to produce rotation of the fan (1) with one of the said different speeds or an idle condition of the fan (1) with respect to the driven shaft (2).

2. Apparatus according to Claim 1, **characterized in that** said driven shaft (2) is supported by the housing (10) of the apparatus via an associated bearing (2a).

3. Apparatus according to Claim 1, **characterized in that** said free-wheel device (100) comprises a first gear (120) mounted on the driven shaft (2) via bearings (2b) and constrained to the shaft (2) by means of a free wheel (121).

4. Apparatus according to Claim 3, **characterized in that** said first gear (120) receives movement from the movement generating means (11) integral with the driving shaft of the vehicle.

5. Apparatus according to Claim 1, **characterized in that** said first gear (120) meshes with a first set of teeth (111) of a toothed rim (110) mounted on an associated bearing (110a) fixed to the housing (10) on an axis parallel to the longitudinal axis of the driven shaft (2).

6. Apparatus according to Claim 5, **characterized in that** the toothed rim (110) has a second set of teeth (112) designed to mesh with the teeth of a second gear (220) coaxially mounted on a bearing (220a) keyed onto the driven shaft (2).

7. Apparatus according to Claim 6, **characterized in that** the relative transmission ratio of the toothed rim (110) and the second gear (220) produces a rotation of the latter at a speed greater than that of the first gear (120).

8. Apparatus according to Claim 1, **characterized in that** the second gear (220) has a set of auxiliary radial teeth (221) designed to mesh with a splined sleeve (310) forming part of the device (300) for controlling the coupling for selecting one or other of the two speeds.

9. Apparatus according to Claim 8, **characterized in that** the sleeve (310) is able to be displaced in both directions, parallel to the longitudinal axis (X-X), on the radial teeth (225a) of a pinion (225) rotationally locked with the shaft (2), producing engagement/disengagement thereof with/from said auxiliary teeth (221) of the second gear (220) and therefore relative coupling/uncoupling thereof with/from the pinion (225) and therefore the shaft (2).

10. Apparatus according to Claim 1, **characterized in that** it comprises a fork member (321) connected to the sleeve (310) and to the piston (331) of a cylinder (330) which is charged/discharged via a duct (332) controlled by electromechanical means connected to the temperature sensors.

11. Apparatus according to Claim 10, **characterized in that** said fork member (321) is constrained in the axial direction, but not rotationally, with the sleeve (310).

12. Apparatus according to Claim 1, **characterized in that** a spring (333) exerting an axial thrust on the piston (331) is arranged between the piston (331) and the fixed housing (10).

13. Apparatus according to Claim 12, **characterized in that** the cylinder (330) is normally discharged so as to keep the sleeve (310) in the position where it is disengaged from the auxiliary teeth of the second gear (220).

14. Apparatus according to Claim 1, **characterized in that** a synchronizer (250) movable axially with the sleeve (310) is arranged between the said sleeve and the auxiliary teeth (221) of the second gear (220).

15. Apparatus according to Claim 14, **characterized in that** the synchronizer has a conical seat (252) designed to engage axially with friction with a corresponding, axial, conical projection (222) of the second gear (220) so as to reduce to zero the relative speed of sleeve and gear prior to axial engagement of the former with the teeth of the latter.

16. Apparatus according to Claim 1, **characterized in that** said clutch (400) is of the electromagnetic type.

17. Apparatus according to Claim 16, **characterized in that** said electromagnetic clutch (400) comprises:
- a rotor (410) which is axially fixed and rotationally locked to the shaft (2);
- a pair of electromagnets (421) and (422) of varying power which are concentric with each other and fixed to the housing (10) fastened to the body (5) of the engine;
- a corresponding pair of armatures (431,432) concentric with each other and facing the respective electromagnet (421,422).

18. Apparatus according to Claim 17, **characterized in that** the radially outermost armature (431) is joined to one end of a respective resilient member (431a), the other end of which is joined to the fan (1) and able to allow an axial displacement of the armature, but not the relative rotation with respect to the fan.

19. Apparatus according to Claim 17, **characterized in that** the radially innermost armature (432) is connected to a friction ring (515) able to engage with said Foucault coupling (500).

20. Apparatus according to Claim 14, **characterized in that** the radially innermost armature (432) has a set of radial teeth (432a) designed to mesh with a corresponding set of teeth (4a) of a bush (4) integral with the shaft (2) together with which it rotates.

21. Apparatus according to Claim 20, **characterized in that** a Belleville washer (433) designed to keep the armature (432) engaged with the teeth (4a) of the bush (4) is axially arranged between the armature (432) and the rotor (431).

22. Apparatus according to Claim 1, **characterized in that** said Foucault coupling (500) comprises a disk (510) idle on a bearing (2d) keyed onto the shaft (2) and carrying a plurality of permanent magnets (511) facing a ring of conductive material (512) integral with the bell member (1a) which carries the fan (1) .

23. Apparatus according to Claim 1, **characterized in that** it comprises a further gear (600) mounted on a bearing (601) integral with the housing (10) and provided with radial teeth (611) suitable for mating with corresponding teeth (111) of the toothed rim (110).

24. Apparatus according to Claim 23, **characterized in that**, on the axially opposite side to the operating side, the gear is formed as a pulley (620) suitable for constituting a power take-off for auxiliary devices of the vehicle.

25. Apparatus according to Claim 23, **characterized in that** said gear (600) is connected to a coupling (700) for operating a driven shaft (801).

26. Apparatus according to Claim 25, **characterized in that** said coupling (700) comprises an electromagnetic clutch with multiple disks (712).

27. Apparatus according to Claim 26, **characterized in that** said multiple disks (712) are alternately fixed to a bell member (710) forming the driving part of the coupling (700) or to a disk (713) axially fixed onto a bush (713a) integral with the shaft (801a).

28. Apparatus according to Claim 27, **characterized in that** an armature (714) is mounted on the bush (713a), said armature being displaceable upon the recall action of the electromagnet (715) so as to cause closing of the coupling (700).

29. Apparatus according to Claim 27, **characterized in that** said coupling comprises a plurality of permanent magnets (720) arranged between the bell member (710) and the armature (714).

30. Apparatus according to Claim 1, **characterized in that** said clutch (1700) comprises a fixed disk (1714) and an armature (1713) pushed towards said disk (1714) by resilient means (1715) arranged between the said armature and the driven part (716) of the coupling.

31. Apparatus according to Claim 23, **characterized in that** said shaft (801) is the shaft for operating the impeller of a water pump.

32. Apparatus according to Claim 1, **characterized in that** said apparatus is closed inside a housing (10) which can be sealingly fastened to the body of the vehicle.

33. Apparatus according to Claim 32, **characterized in that** the movement transmission devices are lubricated with an oil bath.

34. Apparatus according to Claim 1, **characterized in that** it comprises a resilient coupling (900) arranged between the movement transmission means (11) and the driven shaft (2).
